(19) Europäisches Patentamt
European Patent Office
Office européen des brevets

(11) **EP 2 017 241 B1**

(12) **EUROPEAN PATENT SPECIFICATION**

(45) Date of publication and mention
of the grant of the patent:
**05.12.2012 Bulletin 2012/49**

(51) Int Cl.:
*C01B 31/04* (2006.01)       *C04B 35/532* (2006.01)
*C04B 38/00* (2006.01)       *C04B 35/52* (2006.01)
*B23H 1/06* (2006.01)       *B28D 1/16* (2006.01)
*F16F 1/02* (2006.01)

(21) Application number: **08010260.1**

(22) Date of filing: **05.06.2008**

(54) **Graphite material and a method of producing graphite material**

Grafitmaterial und Verfahren zur Herstellung des Grafitmaterials

Matériau de graphite et procédé de production de matériau de graphite

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.06.2007   JP 2007151661**
**31.03.2008   JP 2008092704**

(43) Date of publication of application:
**21.01.2009   Bulletin 2009/04**

(73) Proprietor: **Ibiden Co., Ltd.**
**Gifu, Ogaki 503-8604 (JP)**

(72) Inventors:
• **Nishiwaki, Toshiyuki**
**Ogaki**
**Gifu (JP)**
• **Yasuda, Masahiro**
**Ogaki**
**Gifu (JP)**
• **Ito, Toshiki**
**Ogaki**
**Gifu (JP)**

(74) Representative: **HOFFMANN EITLE**
**Patent- und Rechtsanwälte**
**Arabellastrasse 4**
**81925 München (DE)**

(56) References cited:
**EP-A2- 0 146 399       WO-A1-2007/073793**
**DE-C- 873 227       US-A- 3 171 720**
**US-A- 4 412 675       US-A- 5 525 276**

• **Poco Graphite: "Properties and Characteristics of Graphite for Industrial Applications" November 2001 (2001-11), XP002598686 Retrieved from the Internet: URL:http://www.poco.com/LinkClick.aspx?fil eticket=GeYKfG9Sqtk%3d&tabid=192&mid=719 [retrieved on 2010-08-27]**
• **DATABASE WPI Week 198921 Thomson Scientific, London, GB; AN 1989-155745 XP002599557 & JP 1 097523 A (KAWASAKI ROZAI KK) 17 April 1989 (1989-04-17)**
• **DATABASE WPI Week 199241 Thomson Scientific, London, GB; AN 1992-336011 XP002599558 & JP 4 240022 A (IBIDEN CO LTD) 27 August 1992 (1992-08-27)**

**Description**

BACKGROUND OF THE INVENTION

1. Field of the Invention

The present invention relates to a graphite material and a process for producing the same. Particularly, it relates to a graphite material suitable as a member to be precisely processed into electrodes for electric discharging, jigs for electronic parts or elastic bodies.

2. Description of the Related Art

Since graphite materials possess such properties as excellent chemical stability, thermal resistance, processing characteristic, and the like, the materials have been used in many fields as, for example, an electrode for electric discharging, as a jig for sealing glass and brazing electronic parts and an elastic body. Recently, the miniaturization of home electric appliances and automobile parts has been accompanied by a need for precisely processed thin ribs and grooves, thin pins, fine holes, and the like as molds for use in die-casting and plastic molding. The preparation of such an exact mold necessitates an electrode for electric discharging comprising a graphite material that can undergo precise processing.

To obtain a precise form such as a thin rib by means of electric discharging using a graphite material as an electrode without breaking the electrode, the graphite material needs to have some degree of strength. Moreover, in order to enhance the dimensional accuracy of the mold that is to be processed, it is important that the graphite material is not deformed by heat and external force during electric discharging.

As a high-strength and high-density graphite material suitable for such an application, JP-A-1-97523 discloses the use of mesocarbon microbeads as a raw material. As another means for producing a high-density and high-strength graphite material, JP-A-4-240022 discloses the molding of mesocarbon microbeads having a specific β resin content, ash content, water content, volatile content, fixed carbon, and average particle diameter as a raw material under cold press, as well as their subsequent burning and graphitizing at a predetermined temperature. Since the graphite materials obtained by means of the production processes disclosed in JP-A-1-97523 and JP-A-4-240022 are of high strength and high density, it is advantageous if the materials are difficult to break even when processed into such a precise form as a thin rib.

Meanwhile, JP-A-6-144811 discloses a carbonaceous coil spring in order to remedy a disadvantage of conventional springs such as a metal spring and a ceramic spring. That is, a metal spring has a large temperature dependency in the spring constant and thus is generally used at 200°C or lower, and its thermal resistance is also limited to 600°C and the strength rapidly decreases above the temperature. Moreover, the metal spring is poor in corrosion resistance against rust and chemicals. The thermal resistance of a ceramic spring is also limited to 1000°C and the thermal shock resistance of the ceramic spring is poor. Since both of metal and ceramic have high specific gravity, it is disadvantageous that a device having the metal or ceramic spring incorporated therein has a large weight.

The method for obtaining the carbonaceous coil spring disclosed in JP-A-6-144811 includes: forming an organic material capable of carbonization or an organic string body, which contains carbon fibers, graphite whiskers, graphite powders, amorphous carbon powders, or the like homogeneously dispersed therein and is highly reinforced, into a coil shape; subjecting it to a carbon precursor treatment as needed; carbonizing it through a heating treatment in an inert atmosphere; and covering the whole surface of the carbonized spring with a metal corresponding to a desired function. The carbonaceous coil spring has excellent thermal resistance and corrosion resistance even at a high temperature in the presence of oxygen and is expected to have high strength and reliability.

US 5,525,276 discloses a method for manufacturing a high strength isotropic graphite molded product comprising the steps of: kneading an aggregate consisting of carbonaceous fine powder with a pitch binder to form a kneaded mixture, said carbonaceous fine powder being a fine mosaic coke powder having an average particle size of 1 $\mu$m or less, a maximum particle size of 5 $\mu$m or less and a surface average electrostatic field intensity of at least $1.2 \times 10^{-4}$ esu/cm$^2$; pulverizing the kneaded mixture to form a raw material; molding the raw material under isostatic pressure to prepare a molded article; and carbonizing and graphitizing the molded article by heat treatment in a non-oxidizing atmosphere to produce the high-strength isotropic graphite molded product.

SUMMARY OF THE INVENTION

However, since the conventional graphite materials as disclosed in the above JP-A-1-97523 and JP-A-4-240022 are of high strength and high density, they often demonstrate a large degree of resistance to cutting with a cutting tool during processing, which often leads to chipping. Moreover, since the material shows high resistance to cutting with a cutting tool, the graphite material is deformed by a reaction force when processing a thin rib and a fine pin, which in turn leads to decreased accuracy in the thickness of the material. Furthermore, when an end mill or a drill is used to process inner faces or bottom faces of small frames having a small corner R, thin grooves, deep fine holes, and the like, the end mill or drill deforms, which means that it is not only impossible to achieve highly accurate processing but the cutting tools themselves are often damaged.

These problems can principally be prevented by decreasing the amount of cutting required by a cutting tool. However, in order to do so, it is necessary to take a countermeasure, that is, decrease the advancing rate of the cutting tool or increase the rotations of the cutting tool. In such a method, it is necessary to use a high-performance processing machine and a cutting tool with high rigidity that remains stable at the center, even at high rotation speeds. This method involves longer processing times.

Furthermore, when a conventional graphite material is used as an electrode for electric discharging in finish processing, the following relationship is generally true for the graphite material: as the Shore hardness of the material increases, electrode consumption decreases. Therefore, it is advantageous to achieve a low graphitization temperature and high Shore hardness. However, a graphite material with high Shore hardness also exhibits high cutting resistance, which rapidly degrades the cutting tool.

Meanwhile, in the case of the conventional carbonaceous coil spring described above, it is difficult to form a spring with a high accuracy since the process of carbonization of the organic string body involves a size contraction. Moreover, since the carbon material formed by such a method is a glassy carbon having a high hardness, it is difficult to set its shape by post-processing. It is noted that it is conceivable to process widely used isotropic graphite material into a predetermined shape such as a coil shape to make a spring. However, since pores in the isotropic graphite material is generally flat and large, a crack may easily develop from an edge part of the flat pores to lead to breakage of the spring, so that the widely used isotropic graphite material is not suitable as material for a spring.

Aspects of the present invention relate to the above problem. At least one aspect of the present invention provides a graphite material and a method for producing such a graphite material with high strength and high density as well as an excellent processing characteristic. Additionally, at least one aspect of the present invention provides an elastic body made of the graphite material and a method for producing such an elastic body.

After completing extensive studies on the above-mentioned problems, the inventors of the present application found that a graphite material having a specific structure enables accurate processing without damaging cutting tools during precision processing of thin ribs, thin pins, narrow grooves, fine holes, and the like.

An aspect of the present invention provides a graphite material comprising a graphite (being or obtained from a plurality of graphite particles) and a plurality of pores that form a microstructure. When a cross-section of the microstructure is observed through a scanning electron microscope, the number of pores appearing on the cross-section is 250 or more per 6000 $\mu m^2$, the average area of pores appearing on the cross-section is 5 $\mu m^2$ or less, and the average aspect ratio of the pores appearing on the cross-section is 0.55 or less.

As stated above, the graphite material has a fine structure wherein the number of pores appearing on a cross-section is 250 or more per 6000 $\mu m^2$, the average area of pores appearing on the cross-section is 5 $\mu m^2$ or less, and the average aspect ratio of the pores appearing on the cross-section is 0.55 or less. Fine graphite particles and the pores are preferably distributed homogeneously. The material thus exhibits high strength and a high elastic modulus as well as an excellent processing characteristic. Therefore, when a thin rib and the like undergoes precision processing using the graphite material as described above as an electrode for electric discharging, accurate processing can be achieved without damaging either the graphite material or the cutting tools. Moreover, since the graphite material as described above enables fine processing and little attrition occurs during electric discharging, a mold with a fine pattern can easily be produced. Thus the material is well suited for use as an electrode for electric discharging in finish processing.

## BRIEF DESCRIPTION OF THE DRAWINGS

In the accompanying drawings:

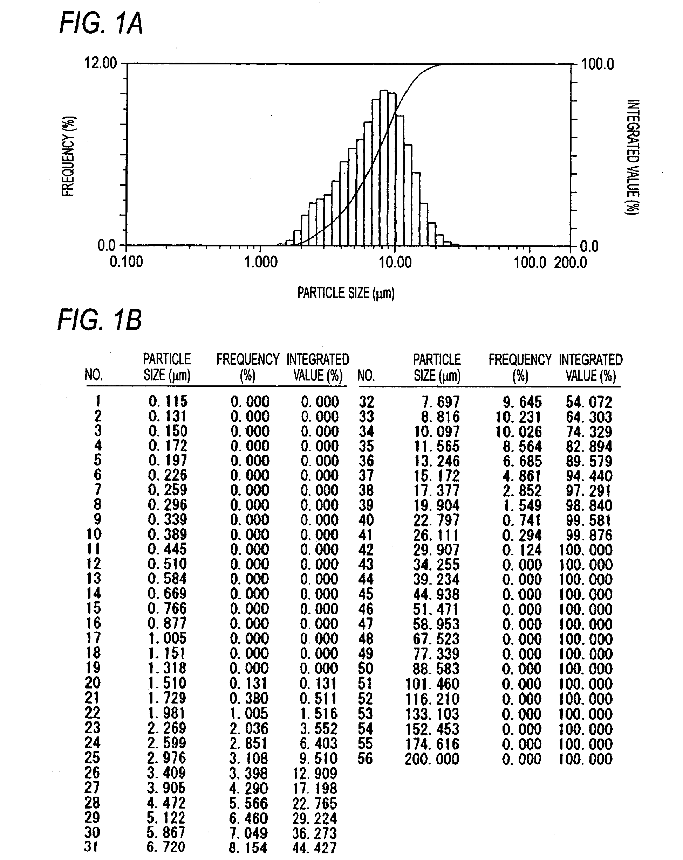

FIG. 1A shows a graph of the particle size distribution for the secondary raw material powder used in Example 1;
FIG. 1B shows values for the particle size distribution for the secondary raw material powder used in Example 1;

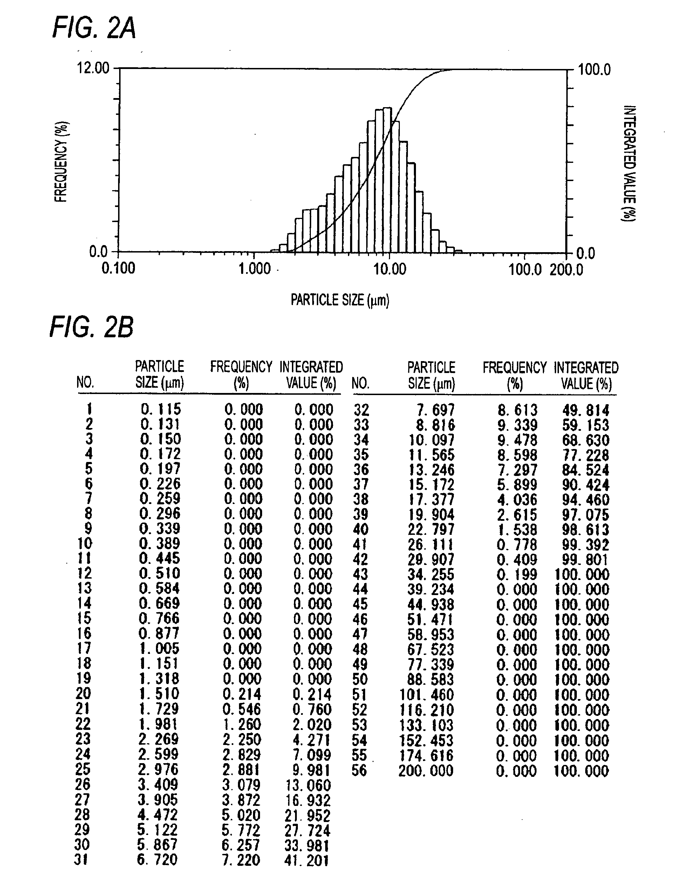

FIG. 2A shows a graph of the particle size distribution for the secondary raw material powder used in Example 2;
FIG. 2B shows values for the particle size distribution for the secondary raw material powder used in Example 2;

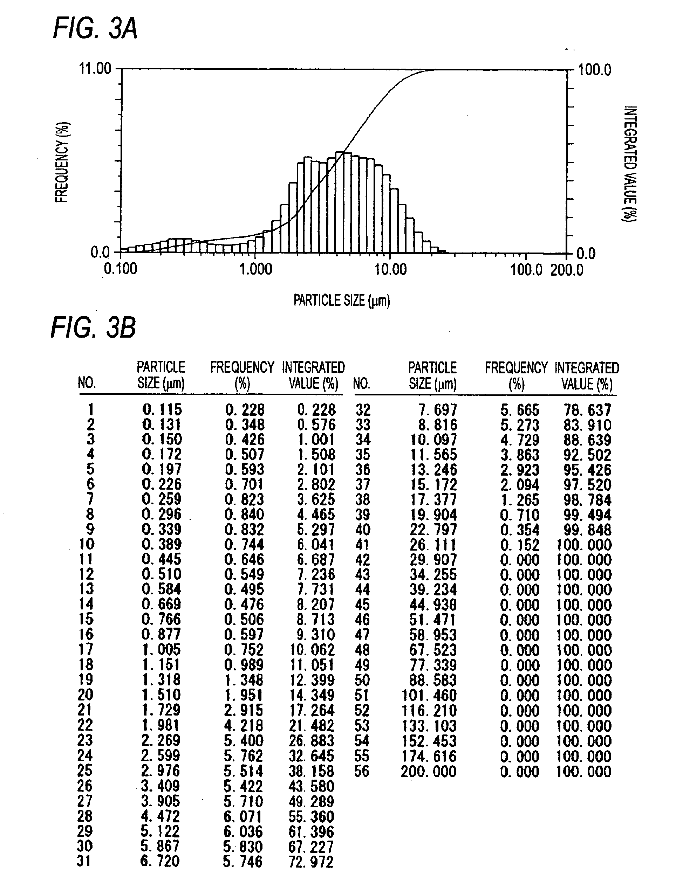

FIG. 3A shows a graph of the particle size distribution for the secondary raw material powder used in Comparative Example 1;
FIG. 3B shows values for the particle size distribution for the secondary raw material powder used in Comparative Example 1;

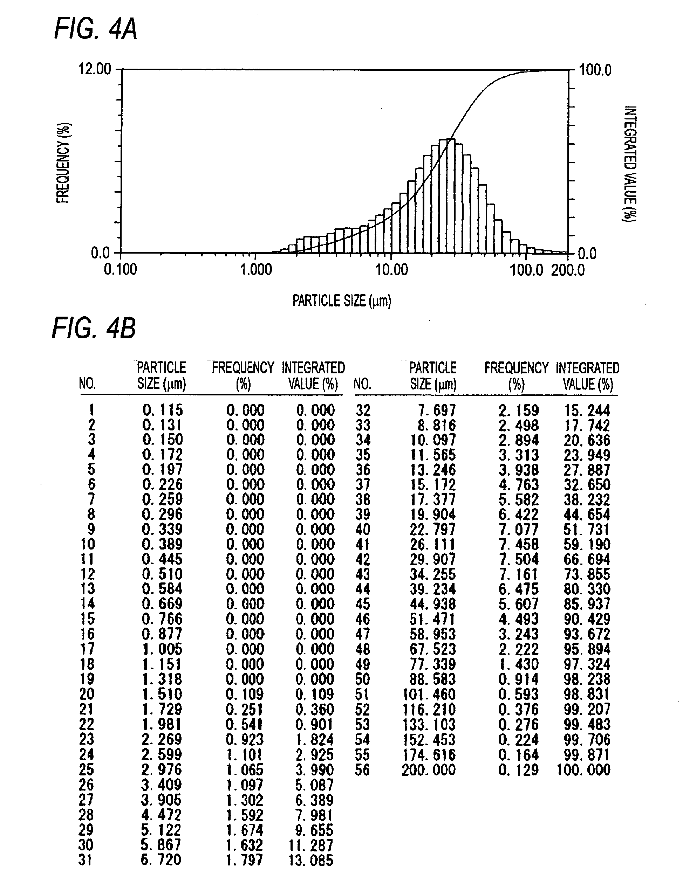

FIG. 4A shows a graph of the particle size distribution for the secondary raw material powder used in Comparative Example 2;

FIG. 4B shows values of the particle size distribution for the secondary raw material powder used in Comparative Example 2;

FIG. 5A shows a cross-sectional SEM photograph of the graphite material prepared in Example 1;

FIG. 5B shows a binarized image obtained by processing the image of the cross-sectional SEM photograph of the graphite material prepared in Example 1;

FIG. 5C shows an elliptic fitting drawing of a binarized image obtained by processing the image of the cross-sectional SEM photograph of the graphite material prepared in Example 1;

FIG. 6A shows a cross-sectional SEM photograph of the graphite material prepared in Example 2;

FIG. 6B shows a binarized image obtained by processing the image of the cross-sectional SEM photograph of the graphite material prepared in Example 2;

FIG. 6C shows an elliptic fitting drawing of a binarized image obtained by processing the image of the cross-sectional SEM photograph of the graphite material prepared in Example 2;

FIG. 7A shows a cross-sectional SEM photograph of the graphite material prepared in Comparative Example 1;

FIG. 7B shows a binarized image obtained by processing the image of the cross-sectional SEM photograph of the graphite material prepared in Comparative Example 1;

FIG. 7C shows an elliptic fitting drawing of a binarized image obtained by processing the image of the cross-sectional SEM photograph of the graphite material prepared in Comparative Example 1;

FIG. 8A shows a cross-sectional SEM photograph of the graphite material prepared in Comparative Example 2;

FIG. 8B shows a binarized image obtained by processing the image of the cross-sectional SEM photograph of the graphite material prepared in Comparative Example 2;

FIG. 8C shows an elliptic fitting drawing of a binarized image obtained by processing the image of the cross-sectional SEM photograph of the graphite material prepared in Comparative Example 2;

FIG. 9 shows a perspective view of an elastic body made of a graphite material;

FIG. 10 shows an example of a lathe used in producing the elastic body made of a graphite material; and

FIGs. 11A to 11E show diagrams of a process for producing the elastic body made of a graphite material.

## DETAILED DESCRIPTION OF THE INVENTION

[First embodiment]

What follows is a detailed description of the embodiments of the graphite material according to the present invention. One aspect of the present invention provides a graphite material comprising a plurality of graphite particles and a plurality of pores that form a microstructure. When a cross-section of the microstructure is observed through a scanning electron microscope, the number of pores appearing on the cross-section is 250 or more per 6000 $\mu m^2$, and the average area of pores appearing on the cross-section is 5 $\mu m^2$ or less. According to the above, the pores distributed in the graphite material are sufficiently small and the number of pores present per unit volume of the graphite material is sufficiently large. Therefore, chipping in a large particle unit does not occur and a smooth processed surface can be obtained. Moreover, since the pores are very small as compared with the usual processed form of the graphite material, the occurrence of fractures caused by the chipping of particles during thin pin processing and crack and boring during thin rib cutting can be reduced.

Additionally, when the cross-section of the microstructure is observed through the scanning electron microscope, the average aspect ratio of the pores appearing on the cross-section is 0.55 or less. According to this, the elastic modulus of the graphite material increases relative to the compression strength exerted by a cutting tool during processing. Therefore, the size of the cutting chips generated during processing can be reduced. The cutting resistance of the cutting tool is small, which makes processing easy.

The above relationship between the form of the pores of the graphite material and its processing characteristic is surmised to be due to the following mechanism.

When a graphite material is cut, compression force acts upon it in the same direction in which the cutting tool is advancing. At this point, as the strain energy accumulated through the advancing movement of the cutting tool exceeds the energy necessary for breakage, the material is cut. In order to obtain a smooth processed surface, it is necessary to process the material by discharging fine cutting powder and breakage must occur prior to the accumulation of large amounts of strain energy.

In order to avoid accumulating large amounts of strain energy, it is necessary to have low compression strength and a large elastic modulus. It is pointed out that the diameter of the particles to be cut is positively correlated with the value of (compression strength)/(elastic modulus). Thus a graphite material having a larger elastic modulus is well suited for obtaining a processed surface having a small (fine) particle diameter of particles to be cut.

The following will describe the relationship between the elastic modulus of the graphite material and the shape of the pores. In general, the elastic modulus of a graphite material is represented by the following Knudsen's empirical

equation:

$$E(P) = E(0)\exp(-bP)$$

where E(P): elastic modulus, P: porosity, and b: empirical constant.

The empirical constant b greatly depends on the shape of the pores. It is known that the value is small when the shape of the pores is spherical and rapidly increases as the shape changes through a flattened spheroid into a cracked pore shape ("Shin-Tanso Zairyo Nyumon" (Guide to Carbon Material), edited by The Carbon Society of Japan). Therefore, a graphite material having a round shape (small aspect ratio) is advantageous for increasing the elastic modulus.

It is believed that the above introduces the relationship between the shape of the pores of the graphite material and its processing characteristic. Namely, since the elastic modulus of the graphite material can be increased by rounding off the shape of the pores, i.e., the average aspect ratio of the pores appearing on the observed cross-section is equal to 0.55 or less, a fine-grained processed surface and thus also a graphite material with an excellent processing characteristic can be obtained.

Then, with regard to the compression strength, even when the pores are flattened spheroids or cracked pores, applied compression load acts so as to crash the pores, so that the shape of the pores does not affect the compression strength. The porosity has a greater effect on compression strength.

When the porosity is small, compression strength increases and it therefore becomes hard to cut the material, which in turn increases the unevenness of the processed surface. When the porosity is large, the compression strength can be lowered but the resulting graphite material becomes soft, which makes it easily broken or cracked even when undergoing fine processing. Moreover, attrition easily occurs during electric discharging.

The porosity of the graphite material is highly correlated with its bulk density. When the same raw material is used and it is subjected to the same graphitization treatment, the bulk density is about the same when the porosity is the same.

In one aspect of the present invention, since pitch is mainly used as a starting material and the starting material and graphitization temperature fall within limited ranges even though component(s) that have been transformed through pitch cokes and component(s) directly carbonized and graphitized exist, the bulk density of the graphite material becomes 1.78 to 1.86 g/cm$^3$, preferably 1.82 to 1.85 g/cm$^3$. In this connection, the bulk density is obtained by measuring the volume and weight of the material.

In one aspect of the present invention, the number, average area, and average aspect ratio of the pores appearing on the cross-section can be calculated by observing the graphite material through an electron microscope or the like. Specifically, the cross-section of the graphite material is processed by a cross-section polisher (CP) method. After the prepared cross-section undergoes a flat milling treatment (45°, 3 minutes), the number, average area, and average aspect ratio of the pores are obtained by observing the cross-section with an FE-SEM.

As part of the analysis of the obtained images, the area of each void (pore appearing on the cross-section) is calculated following binarization using an image analyzing software (IMAGE J 1.37). The average area is obtained by dividing the total area of the pores by the number of pores. Elliptic fitting is also performed on each void and the aspect ratio is calculated based on the values of its major axis and minor axis.

In this connection, the aspect ratio means a value of (major axis - minor axis)/(major axis) of the ellipse fitted void (pore appearing on the cross-section).

When measuring the number, average area, and average aspect ratio of the pores appearing on the cross-section, SEM is used as mentioned above. This is because this ensures sufficient resolution for determining the shape of the pores in a micron order and allows clear discrimination of the pores and particles. The particle part is displayed as gray with a single density and the pore part is displayed as black in the case of deep pores and as white in the case of shallow pores, depending on the depth of the pores.

When measuring the number, average area, and average aspect ratio of the pores appearing on the cross-section, it may be advantageous to use a graphite material that is not filled with a resin. This is because, once the graphite material is filled with a resin, the open pores present inside the graphite material are sealed with the resin and thus the correct number and shape of the pores cannot be determined.

The maximum pore diameter (major axis or maximum size of the pores) should preferably be 20 μm or less. When the maximum pore diameter is more than 20 μm, a crack develops along the pores during cutting, so that a thin pin is broken and a thin rib is cracked during the cutting process, which leads to hole formation.

The maximum pore size (diameter) can also be measured from the cross-section observed with SEM in the same manner as described above. In this connection, the diameter of the pore obtained from the SEM observation of the cross-section is different from the diameter of the pore and the graphite particle obtained by means of a mercury porosimeter or the like. The former measures an actual size but the latter measures a diameter of the entrance part of a continuous pore.

According to one aspect of the present invention, the Shore hardness of the graphite material should preferably range from 55 to 80. When the Shore hardness is less than 55, the particles are more likely to chip during electric discharging and attrition of the electrode is extensive, so that the resulting material is not suitable for use as an electrode for electric discharge. When the Shore hardness exceeds 80, the cutting resistance with a cutting tool increases when an electrode is cut, so that the cutting tool rapidly wears down and the material may also be easily broken or chipped.

The Shore hardness can be measured in accordance with the Japan Industry Standards (JIS) Z2246.

According to one aspect of the present invention, the specific resistance of the graphite material preferably ranges from 1000 to 2300 $\mu\Omega$cm, more preferably from 1000 to 2000 $\mu\Omega$cm. The specific resistance correlates with the Shore hardness of the graphite material; when the specific resistance is lowered, the graphite material is softened. When the specific resistance is less than 1000 $\mu\Omega$cm, the Shore hardness falls below 55, which leads to extensive attrition of the electrode. In this case, even when the material is processed in a fine pattern and used as an electrode, the processed accuracy cannot be transferred to a mold owing to the severe attrition of the electrode. When the specific resistance is greater than 2300 $\mu\Omega$cm and the material is used as an electrode for electric discharge, abnormal electric discharge may occur and unevenness tends to be generated on the surface of the article to be processed.

The specific resistance can be measured in accordance with JIS R7222, a fall-of-potential method.

According to one aspect of the present invention, the graphite material is especially suitable for use as an electrode for electric discharging in finish processing. In rough processing, a mold is roughly processed and particularly fine processing is not provided. According to one aspect of the present invention, the graphite material can be processed in the fine and highly accurate pattern necessary for final finish processing.

The following will describe the process for producing the graphite material according to an aspect of the present invention. The process for producing the graphite material according to the aspect involves the production of a secondary raw material by adding a carbonaceous fine powder to pitch, kneading (mixing) this and applying a thermal treatment (heating) at 400 to 500°C while controlling the volatile content. The next step of the process involves pulverizing the obtained secondary raw material while controlling particle size to avoid overpulverizing. This step is carried out in a pulverizing machine that removes a fine powder with a smaller particle diameter. This step results in a secondary raw material powder (particles), which is then molded into a cuboid by means of cold isostatic press molding (CIP molding), burned at about 1000°C in a burning furnace, and graphitized at about 2500°C in a graphitization furnace to obtain a graphite material according to the aspect of the present invention.

The pitch that is used in one aspect of the present invention is a carboniferous or petroleum pitch or a mixture thereof. A carboniferous pitch may be the most suitable of these raw materials because optical anisotropy is difficult to develop (crystals are difficult to develop into a needle shape) in a carboniferous pitch, which makes it possible to obtain a high-strength and high-elastic modulus graphite material.

The softening point of the pitch that is used in the embodiment of the present invention is 50°C or lower. When the softening point is higher than 50°C, viscosity during kneading increases and production becomes difficult.

The carbonaceous fine powder that is used in one aspect of the present invention becomes a nucleus during the development of a meso-phase. Examples of suitable carbonaceous fine powders are carbon black, a graphite fine powder, a raw pitch coke fine powder, or a calcined pitch coke fine powder. The size of the fine powder should preferably be 5 $\mu$m or less. When a fine powder is larger than 5 $\mu$m, it becomes difficult to control the particle size distribution when pulverizing the secondary raw material obtained after kneading. This increases the coarse side of the particle size distribution. The amount to be added to the pitch ranges from 3 to 10% by weight. When more than 10% by weight of fine powder is added, the viscosity of the pitch increases and production becomes difficult. When the amount is less than 3% by weight, a mosaic structure of cokes cannot be developed to a sufficient extent.

When the raw material is treated thermally by means of the above described process, temperature and time are controlled to ensure that the volatile content measured by JIS 8812 ranges from 6 to 12%, more preferred being from 8 to 11%. This results in the secondary raw material. When the volatile content is less than 6%, it is only possible to obtain a low-density graphite material due to insufficient adhesion between the particles. When the volatile content is more than 12%, a large amount of hydrocarbon gas is generated from the inside during burning, so that the resulting material tends to be broken and the accumulated gas forms large pores.

The secondary raw material obtained by the above described thermal treatment of the raw material is pulverized while controlling for particle size. The fine powder is then removed from the resulting secondary raw material powder. The pulverization method incorporates a method for using a pulverizing machine with an integrated classifying machine, a method for using a pulverizing plant with a pulverizing machine and a precise airflow classifying machine, a method for separately controlling the particle size of a raw material that has been pulverized in a pulverizing machine in a precise airflow classifying machine, and the like.

In a graphite material using a secondary raw material powder containing a fine powder, it is difficult to release the gas generated during burning, which tends to break the material. Furthermore, gas accumulates in the material and forms large pores.

The median size (DP-50: a diameter at integral number of 50%) of the secondary raw material powder as measured by a laser diffraction-type particle size meter should preferably range from 5 to 10 $\mu$m, more preferred being from 6 to 9 $\mu$m. The pores present between the particles frequently have a sharp edge and a large aspect ratio. In the case of a large particle size, the size and shape of the pores show a synergistic effect and cause a large decrease in elastic modulus. When the median size is more than 10 $\mu$m, the elastic modulus decreases and the graphite material cannot be obtained according to the aspect of the present invention. Moreover, when the median size is less than 5 $\mu$m, the volatile content generated from a molded article of the secondary raw material powder during burning cannot be rapidly discharged to the outside of the material and thus the material tends to break. Furthermore, gas accumulates in the material and forms large pores.

Moreover, with regard to the secondary raw material powder, the particle size distribution measured by means of a laser diffraction-type particle size meter ranges from 1 $\mu$m to 80 $\mu$m. When a raw material of less than 1 $\mu$m is contained, the volatile content generated from a molded article of the secondary raw material powder during burning cannot be rapidly discharged to the outside of the material and thus the material tends to break. Furthermore, gas accumulates in the material and forms large pores. When particles of 80 $\mu$m or more are contained, flattened pores tend to form at an outer peripheral part of large particles and in the vicinity of the interface of the large particles themselves. The number of pores and the average cross-sectional area also decreases.

A LA-750 manufactured by HORIBA LTD. can for example be used for the laser diffraction-type particle size meter. In the measurement, the secondary raw material powder is dispersed by surface active agents such as tween 20.

The following examples provide a more detailed description of aspects of the present invention. The present invention is, however, not limited to the following examples.

[Examples]

1. Production of Graphite Material

(Examples 1 and 2)

5 parts by weight of calcined cokes pulverized into an average diameter of 2 $\mu$m was added to 95 parts by weight of a carboniferous pitch having a softening point of 40°C, and kneaded. It then underwent thermal treatment and the volatile content was adjusted under thermal treatment at 415°C to obtain a secondary raw material. The secondary raw material was then pulverized by means of a pulverizing machine with an integrated classifying machine to avoid over-pulverization. This resulted in a secondary raw material powder. Subsequently, following pressurization at a pressure of 100 MPa in an isostatic press, the powder was burned to 1000°C at a temperature that increased at a rate of about 5°C/hour. Graphitization was carried out at 2500°C.

In this connection, the secondary raw material powder obtained during production did not contain powders having a diameter of 1 $\mu$m or less or powders having a diameter of 80 $\mu$m or more in a particle size distribution measured on a laser diffraction-type particle size distribution meter.

Table 1 shows the characteristic values of the raw materials used and Tables 2 and 3 show the characteristic values of the graphite materials obtained.

(Comparative Example 1)

A graphite material was produced as described in Examples 1 and 2 with the exception that the pulverization was carried out by means of a pulverizing machine that did not have an integrated classifying machine. The secondary raw material powder obtained during production was thus not subjected to precise airflow classification or the like and did not contain powders having a diameter of 80 $\mu$m or more. It did contain powders having a diameter of 1 $\mu$m or less in an amount of 9.3% in a particle size distribution measured on a laser diffraction-type particle size distribution meter.

Table 1 shows the characteristic values of the raw materials used and Tables 2 and 3 show the characteristic values of the graphite materials obtained.

(Comparative Example 2)

65 parts by weight of calcined cokes pulverized into an average diameter of 14 $\mu$m was added to 35 parts by weight of a carboniferous pitch having a softening point of 80°C, and kneaded. It then underwent thermal treatment and the volatile content was adjusted under thermal treatment at 250°C to obtain a secondary raw material. It was then pulverized by means of a pulverizing plant fitted with a pulverizing machine and a precise airflow classification machine to avoid over-pulverization. This resulted in a secondary raw material powder. Subsequently, following pressurization at a pressure of 100 MPa in an isostatic press, the powder was burned to 1000°C at a temperature that increased at a rate of about 5°C/hour. Graphitization was carried out at 2500°C.

In this connection, the secondary raw material powder obtained during production did not contain powders having a diameter of 1 $\mu$m or less but contained powders having a diameter of 80 $\mu$m or more in an amount of about 3% in a particle size distribution measured on a laser diffraction-type particle size distribution meter.

Table 1 shows the characteristic values of the raw materials used and Tables 2 and 3 show the characteristic values of the graphite materials obtained.

2. Characterization

The following items were measured to characterize the graphite materials obtained as described above. (Bulk density, Shore hardness, specific resistance)

Test pieces having.a size of $\phi$ 8 x 60 mm were cut out of the graphite materials prepared in the above and the bulk density, Shore hardness, and specific resistance were measured and/or calculated as specified above.

(Number, average area, average aspect ratio of pores appearing on cross-section)

The number, average area, and average aspect ratio of the pores appearing in a cross-section were calculated using the following procedures.

(a) Rough grinding of sample

The test piece prepared in the above manner was cut into a column having a thickness of about 5 mm. Both surfaces of the sample were surface-fixed using a jig MODEL 623 manufactured by GATAN, INC. and a SiC waterproof abrasive paper #2400. Then, the sample was fixed on a brass sample table.

(b) CP processing

CP processing was performed at an accelerating voltage of 6 kV using SM09010 manufactured by JEOL LTD.

(c) Milling

Ar milling treatment was performed at an accelerating voltage of 5 kV, 0.5 mA, a sample tilt angle of 45°, and a milling time of 3 minutes using a flat milling apparatus E-3200 manufactured by HITACHI HIGH-TECHNOLOGIES CORPORATION.

(d) FE-SEM observation

The sample prepared as described above was observed at an accelerating voltage of 2 kV using an ultra-high resolution field emission-type scanning electron microscopy S-4800 manufactured by Hitachi High-Technologies Corporation.

(e) Image analysis

The SEM image obtained in the above manner was analyzed using the analyzing software Image J 1.37 manufactured by National Institutes of Health. The magnification used on this occasion was 2000-fold and, after noise-reduction treatment, binarization into the planer parts/void (pore) parts was performed. In this connection, the voids (pores) targeted for the analysis had a size exceeding 0.2 $\mu$m, a size at which it is possible to determine whether they were voids (pores) or not.

Area measurement and optimum ellipse fitting were carried out on the void (pore) parts obtained by binarization using the image analyzing software (Image J), and the number of void parts was also counted. Then, the number, average area, and average aspect ratio of the pores appearing on the cross-section were calculated from the values obtained by the above treatment.

(Compression strength)

Measurement was performed in accordance with JIS R7222.

(Elastic modulus)

Measurement was performed in accordance with JIS R7222.

3. Performance Evaluation Test

The graphite material obtained in each of the Examples and Comparative Examples was processed into a rod having a size of about $\phi$ 70 x 100 mm. Processing was performed on a lathe at a cutting depth of 1 mm and a advancing rate of 1 mm/rotation. The number of rotations of the lathe was set at 120 rpm. As a cutting tool, TNGG160408R-A3 manufactured by KYOCERA Corporation was used.

The cutting chips thus obtained were collected and applied to a multistage vibrating sieve and their median size (DP-50: a diameter at integral number of 50%) was measured. In this connection, it is difficult to obtain an accurate value of median size by means of the multistage vibrating sieve since the number of usable sieves is limited. However, a median size value was obtained by interpolation from the amount passed toward the mesh of the lowest sieve through which 50% by weight of the chips were passed and the amount passed toward the mesh of the highest sieve through which 50% by weight of the chips could not be passed. The processing characteristic of the graphite material was evaluated based on the obtained DP-50 values. It is determined that a material having a lower DP-50 value has an excellent processing characteristic and exhibits less cracking and chipping. Table 3 shows evaluation results of the processing characteristic of the samples of Examples and Comparative Examples.

[Table 1]

| | Softening point of pitch | Carbonaceous fine powder | Median size of carbonaceous fine powder | % by weight of pitch | % of volatile content of secondary raw material | Median size of secondary raw powder | Minimum particle size of secondary raw powder | Maximum particle size of secondary raw powder |
|---|---|---|---|---|---|---|---|---|
| Example 1 | 40°C | Pitch cokes | 2 $\mu$m | 95% | 10.3 | 7.3 $\mu$m | 1.5 $\mu$m | 30 $\mu$m |
| Example 2 | 40°C | Pitch | 2 $\mu$m | 95% | 9.8 | 7.7 $\mu$m | 1.5 $\mu$m | 34 $\mu$m |
| Comparative Example 1 | 40°C | Pitch cokes | 2 $\mu$m | 95% | 10.3 | 4.0 $\mu$m | 0.1 $\mu$m | 26 $\mu$m |
| Comparative Example 2 | 80°C | Pitch cokes | 14 $\mu$m | 35% | 12.0 | 22 $\mu$m | 1.5 $\mu$m | 200 $\mu$m |

[Table 2]

|  | Number of pores /6000 $\mu m^2$ | Ratio of total area of pores to whole (%) | Average area of pores $\mu m^2$ | Average aspect ratio of fitted ellipse |
|---|---|---|---|---|
| Example 1 | 364 | 17.94 | 2.97 | 0.50 |
| Example 2 | 336 | 19.97 | 3.58 | 0.50 |
| Comparative Example 1 | 228 | 24.35 | 6.57 | 0.41 |
| Comparative Example | 44 | 8.70 | 11.95 | 0.69 |

[Table 3]

|  | Bulk density g/cm$^3$ | Compression strength MPa | Elastic modulus GPa | Shore hardness | Specific resistance $\mu\Omega$cm | Processing characteristic $\mu$m |
|---|---|---|---|---|---|---|
| Example 1 | 1.85 | 92 | 12.7 | 67 | 1850 | 820 |
| Example 2 | 1.82 | 105 | 11.4 | 63 | 1790 | 890 |
| Comparative Example 1 | 1.79 | 128 | 11.2 | 68 | 1520 | 1010 |
| Comparative Example 2 | 1.76 | 83 | 8.2 | 57 | 1630 | 1310 |

As shown in Table 3, since the graphite materials of Examples 1 and 2 belonging to the range of an aspect of the present invention result in small cutting chips as compared with Comparative Examples 1 and 2, more precise processing is possible. They therefore have an excellent processing characteristic.

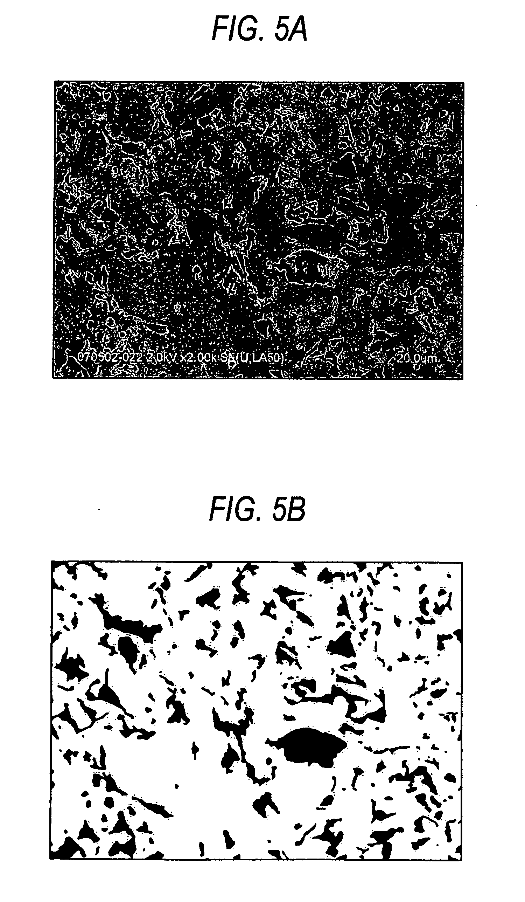

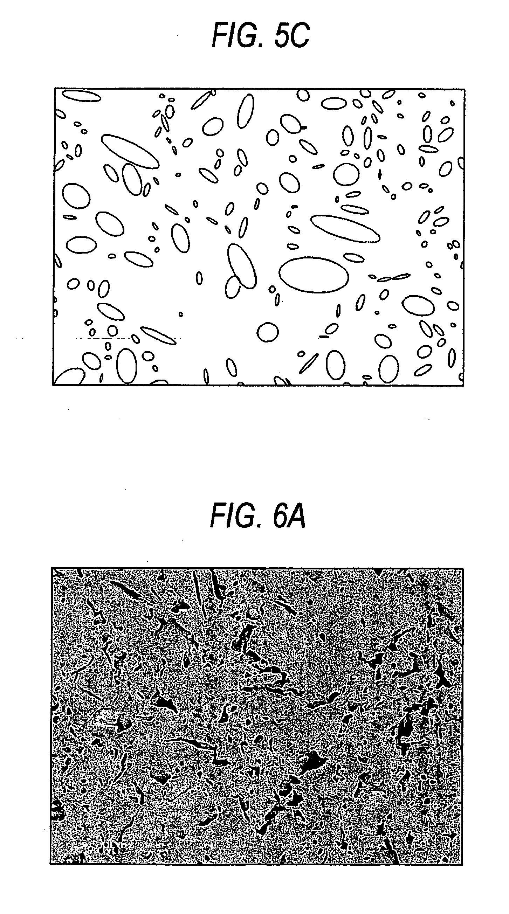

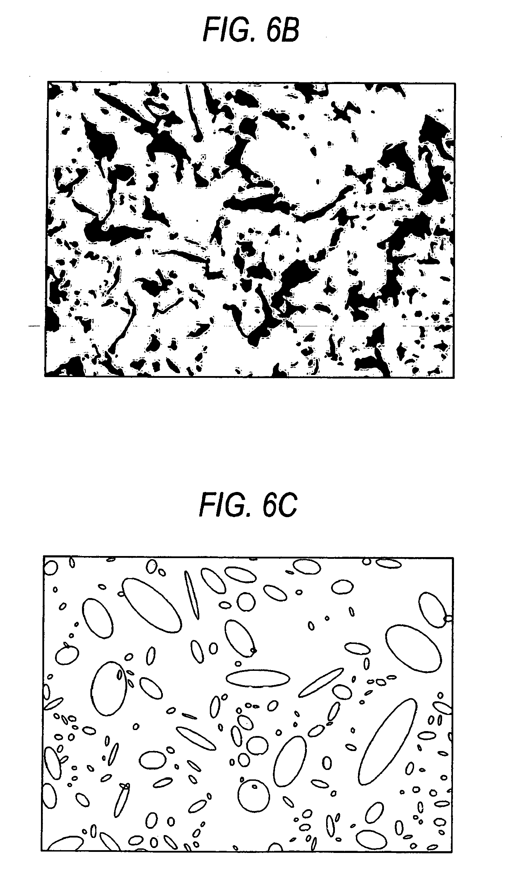

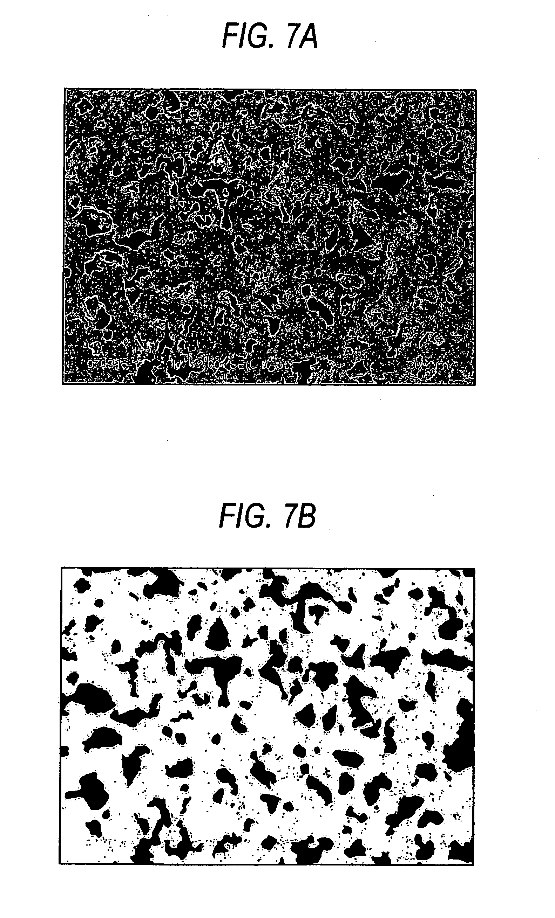

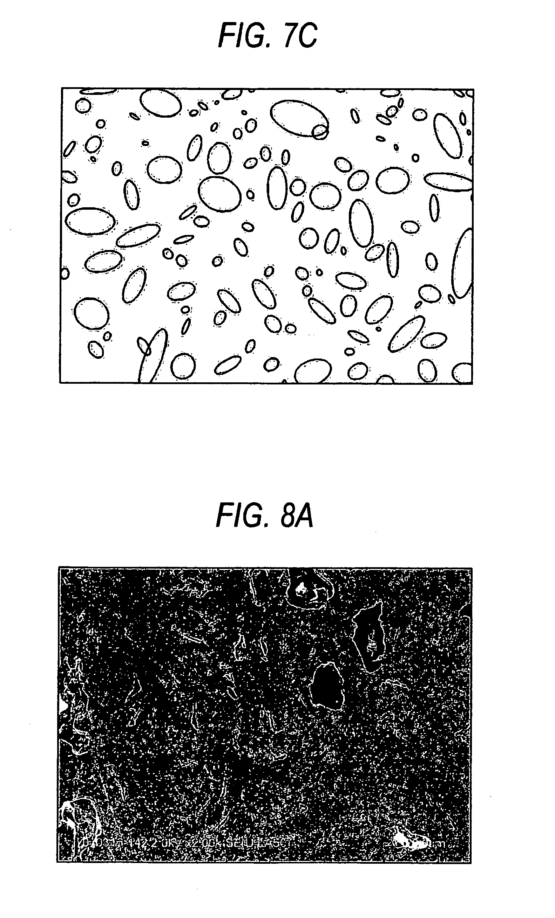

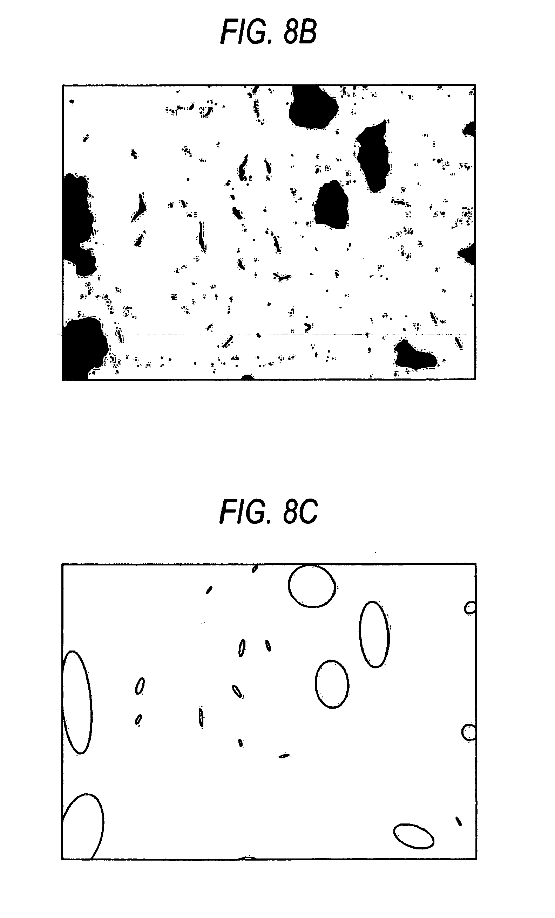

Moreover, it becomes evident from the cross-sectional photographs shown in FIGs. 5A to 5C and FIGs. 6A to 6C, that a large number of relatively small round pores are homogeneously distributed in the graphite materials according to the embodiment of the present invention. In contrast, a small number of round pores and a large number of relatively large pores are present in the graphite materials of the Comparative Examples shown in FIGs. 7A to 7C and FIGs. 8A to 8C.

The graphite materials according to an aspect of the present invention hardly crack, chip. even during fine processing. Thus, the graphite material can be utilized as electrodes for electric discharging having fine patterns, fine holes, pins, ribs, jigs for electronic parts, elastic bodies.

[Second embodiment]

The following will describe an elastic body which is an exemplary application of the graphite material according to one aspect of the present invention. The elastic body made of the graphite material is suitable for use in various devices for chemical synthesis, aerospace environment utilizing devices, nuclear reactors, nuclear fusion reactors, high-temperature furnaces for thermal treatment, sensors, differential thermal balances, chemical pumps, parts for engines. Particularly, in the case where the elastic body made of the graphite material according to one aspect of the present invention has a plate-shape, the elastic body made of the graphite material may be applied with a load in a thickness direction thereof and may be used as, for example, a diaphragm, a leaf spring, a conical spring, and the like in a pressure sensor, a load cell, and the like. In the case where an elastic body made of the graphite material has a string-shape, the elastic body made of the graphite material may be applied with a load in a thickness direction thereof or in a twisting direction thereof, may have not only a linear-shape but also a spiral-shape, and may be used as a coil spring, a flat-coiled spring, and the like.

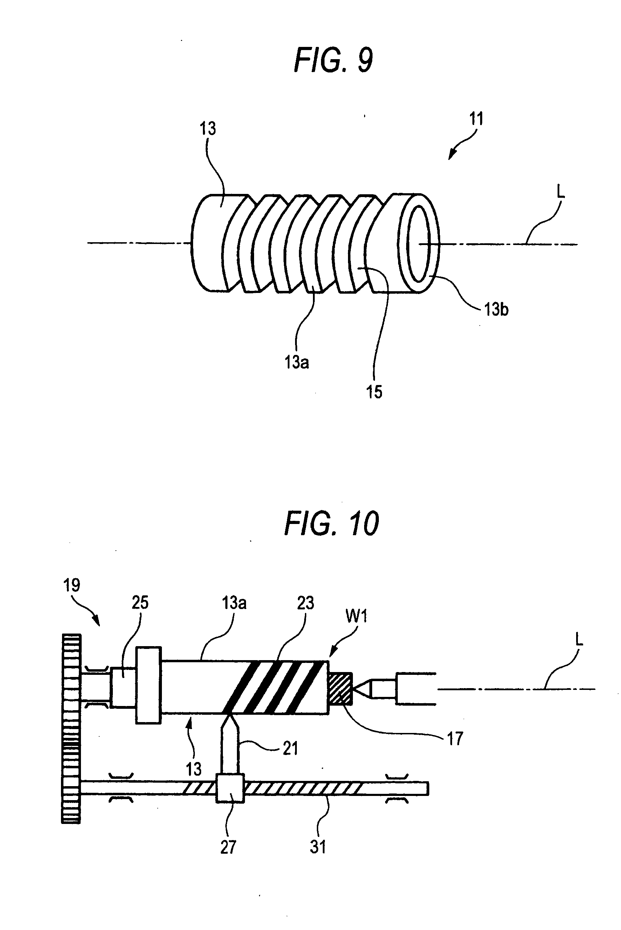

FIG. 9 shows a perspective view of the elastic body made of a graphite material. Hereinafter, a coil spring 11 will be described as an example of the elastic body made of the graphite material according to one aspect of the present invention. The coil spring 11 is obtained by cutting (carving) an outer periphery 13a of a cylindrical spring base material 13 made of a graphite material with a spiral cutting groove 15 to form a coil spring shape as an axis line L being centered. Namely, the coil spring 11 is formed into a coil spring shape in which a rod having a square cross-section is spirally wound. In the usual coil spring formed by winding a rod, an edge part (seat) 13b should be processed into flat. However, in the case of the coil spring 11, since the flat cylinder edge part 13b of the cylindrical spring base material 13 can be utilized as it is, the flattening process can be easily performed. In this connection, if the cylindrical spring base material 13 is formed in a cone shape, a conical coil spring can be obtained by a similar manner.

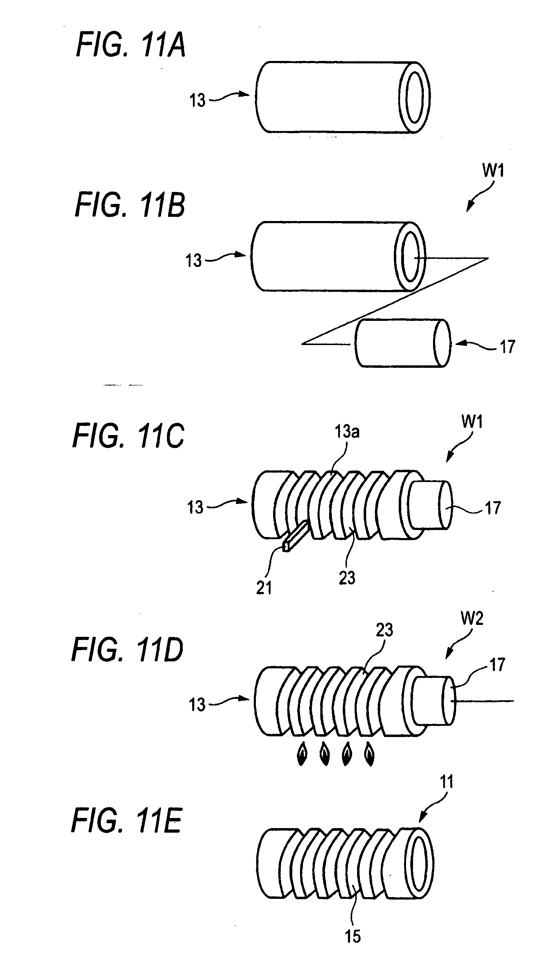

The following will describe the process for producing the coil spring 11. FIG. 10 shows an example of a lathe used in producing the elastic body made of a graphite material. FIGs. 11A to 11E show diagrams of a process for producing the elastic body made of a graphite material. The process for producing the elastic body made of the graphite material involves the production of the cylindrical spring base material 13 which is made of the graphite material as shown in FIG. 11A. It is noted that the graphite material itself is produced as explained in the first embodiment.

As shown in FIG. 11B, a columnar body 17 is fixed to an inner periphery of the cylindrical spring base material 13 with an adhesive to obtain a workpiece W1. The columnar body 17 may be made of a graphite material. Any adhesive may be used which is thermally decomposable and vaporizable. For example, $\alpha$-cyanoacrylate adhesive (instant adhesive) is preferably used. The $\alpha$-cyanoacrylate adhesive is depolymerized into monomers by heating to the range from 200 to 300°C. Therefore, the adhesive can be thermally decomposed without oxidizing the graphite material since an oxidization onset temperature of the graphite material is around 400°C.

Then, using a lathe 19 shown in FIG. 10, while rotating the workpiece W1 about the axis line L, a cutting tool (turning tool) 21 is relatively displaced in parallel to the axis line L to cut the cylindrical spring base material 13 with a spiral groove 23 which reaches the columnar body 17, as shown in FIG. 11C. Specifically, as if the screw-thread cutting would be performed on the workpiece W1, the workpiece W1 is rotated with a main axis 25 as a rotation center. The cutting tool 21 is displaced from a cutting tool holder 27 along a guide axis 31 parallel to the main axis 25 with synchronizing the rotation of the workpiece W1 while the cutting tool 21 is brought into contact with a peripheral of the workpiece W1. Accordingly, the spiral groove 23 is formed. In this connection, the columnar body 17 serves as a reinforcing member of the cylindrical spring base material 13 and strength against crushing toward the inside of the cylindrical spring base material 13 in a radial direction is enhanced, so that it becomes possible to perform a spiral groove cutting processing to the outer periphery 13a of the cylindrical spring base material 13.

After a workpiece W2 having the spiral groove 23 formed as shown in FIG. 11D is obtained, the workpiece W2 with the spiral groove 23 is then subjected to a thermal treatment at a temperature ranging from the decomposition temperature of the adhesive or higher to the oxidation temperature of the graphite material or lower. Then, the columnar body 17 is removed. Thus, the coil spring 11 shown in FIG. 11E is produced.

Consequently, according to the coil spring 11, it is formed using a graphite material including a graphite containing a plurality of pores. The graphite and the plurality of pores form a microstructure. When a cross-section of the microstructure is observed with a scanning electron microscope, the number of the pores appearing on the cross-section is 250 or more per 6000 $\mu m^2$, the average area of the pores appearing on the cross-section is 5 $\mu m^2$ or less, and the average aspect ratio of the pores appearing on the cross-section is 0.55 or less. Therefore, fine graphite particles and pores are homogeneously distributed and the elastic body has thermal resistance, corrosion resistance, and cutting ability with a high strength and a high elastic modulus and further, dimensional accuracy can be enhanced. As a result, the coil spring 11 remedies the defect of the carbon material, does not break even after repeated use in various devices for chemical synthesis, aerospace environment-utilizing devices, nuclear reactors, nuclear fusion reactors, and the like, can be also stably utilized under a situation where a metal spring cannot be used, and have a long operating life.

Moreover, the method for producing the coil spring 11 includes: forming a cylindrical spring base material 13 using the above graphite material; obtaining a workpiece by fixing a columnar body, to an inner periphery of the cylindrical spring base material 13 with an adhesive; relatively displacing a cutting tool in parallel to a center axis of the cylindrical spring base material 13 while rotating the workpiece W1 about the center axis to cut the cylindrical spring base material 13 with a spiral groove 23 which reaches the columnar body 17; heating the workpiece W2 cut with the spiral groove 23 to depolymerize the adhesive; and removing the columnar body 17 from the cylindrical spring base material 13. Therefore, the spiral groove cutting processing can be performed to the outer periphery 13a of the cylindrical spring base material 13 while using the columnar body 17 as a reinforcing member of the cylindrical spring base material 13 without crushing the cylindrical spring base material 13 inward in a radial direction to thereby obtain the elastic body made of the graphite material having a coil shape.

The following examples provide a more detailed description of aspects of the present invention. The present invention is, however, not limited to the following examples. In the second embodiment, the Examples 1 and 2, and Comparative Examples 1 and 2 described in the first embodiment are used for producing a coil spring. Therefore, the details of these examples of the graphite material will be omitted.

[Examples]

1. Production of Coil Spring

A graphite material of each of Examples and Comparative Examples is processed into a hollow cylindrical shape having a thickness of 2.5 mm, which is used as a cylindrical spring base material 13 (FIG. 11A). A columnar body 17 is adhered to an inner periphery of the cylindrical spring base material 13 with α-cyanoacrylate to form a workpiece W1 wherein the cylindrical spring base material 13 and the columnar body 17 are integrated (FIG. 11B). Using a lathe 19 shown in FIG. 10, a spiral groove 23 having a width of 1 mm and a pitch of 2 mm is formed at the workpiece W1 (FIG. 11C). The resultant workpiece W2 is subjected to a thermal treatment at 330°C and then the columnar body 17 is removed (FIG. 11D). Accordingly, a coil spring 11 is obtained (FIG. 11E).

2. Evaluation of Coil Spring

No apparent difference was visually confirmed not only on the coil springs of Examples (coil springs using the graphite materials of Examples 1 and 2) but also on the coil springs of Comparative Examples (coil springs using the graphite materials of Comparative Examples 1 and 2). However, as also recognized from the cross-sectional photographs of the graphite materials shown in FIG. 5A to FIG. 5C, FIG. 6A to FIG. 6C, FIG. 7A to FIG. 7C, and FIG. 8A to FIG. 8C, a large number of relatively small-sized round pores are homogeneously distributed in the graphite materials of Examples, while round pores are small in number and a large number of relatively large pores are present in the graphite materials of Comparative Examples. Therefore, the coil springs made of the graphite materials of Examples and the coil springs made of the graphite materials of Comparative Examples are significantly different in resistance against stress. Specifically, in the case of the coil springs of Comparative Examples, chipping occurred during the compression from the natural-length state to the most compressed state so that the springs were broken only by repeating expansion and compression several times. Contrarily, in the case of the coil springs of Examples, chipping did not occur even when expansion and compression between the natural-length state and the most compressed state were repeated, and therefore, the springs were not broken even when the expansion and compression were repeated 1000 times.

**Claims**

1. A graphite material comprising:

   a graphite containing a plurality of pores, wherein the graphite and the plurality of pores form a microstructure, and wherein when a cross-section of the microstructure is observed with a scanning electron microscope, the number of the pores appearing on the cross-section is 250 or more per 6000 $\mu m^2$, the average area of the pores appearing on the cross-section is 5 $\mu m^2$ or less, and the average aspect ratio of the pores appearing on the cross-section is 0.55 or less.

2. The graphite material according to claim 1,
   wherein the bulk density of the graphite material ranges from 1.78 to 1.86 g/cm$^3$.

3. The graphite material according to one or more of the preceding claims,
   wherein the maximum long axis of the pores is 20 $\mu m$ or less.

4. The graphite material according to one or more of the preceding claims,
   wherein the Shore hardness of the graphite material ranges from 55 to 80, and
   wherein an electric resistance of the graphite material ranges from 1000 to 2300 $\mu\Omega$cm.

5. Use of the graphite material according to one or more of the preceding claims for electric discharging.

6. A method for producing the graphite material of claim 1, the method comprising:

   mixing carbonaceous particles and pitch;
   heating the mixed carbonaceous particles and the pitch to obtain a secondary raw material while controlling the volatile content thereof;
   pulverizing the secondary raw material to obtain secondary raw material particles;
   molding the secondary raw material particles;

burning the molded secondary raw material particles; and

graphitizing the burned secondary raw material particles, **characterized in that**:

the softening point of the pitch is 50 degrees C or less;

the amount of the carbonaceous particles mixed with the pitch ranges from 3 to 10 % by weight of the total amount of the carbonaceous particles and pitch;

the heating of the mixed carbonaceous particles and the pitch is performed at a temperature of from 400 to 500°C;

the sizes of the secondary material particles range from 1 to 80 $\mu$m.

7. The method according to claim 6,
wherein the size of the carbonaceous particles is 5 $\mu$m or less.

8. The method according to one or more of claim 6 or 7, wherein the median size of the secondary material particles ranges from 5 to 10 $\mu$m.

9. An elastic body made of the graphite material of claim 1.

10. A method for producing the elastic body of claim 9, the method comprising:

producing a cylindrical base material with using a graphite material, the graphite material comprising a graphite containing a plurality of pores, wherein the graphite and the plurality of pores form a microstructure, and wherein when a cross-section of the microstructure is observed with a scanning electron microscope, the number of the pores appearing on the cross-section is 250 or more per 6000 $\mu$m$^2$, the average area of the pores appearing on the cross-section is 5 $\mu$m$^2$ or less, and the average aspect ratio of the pores appearing on the cross-section is 0.55 or less;

obtaining a workpiece by fixing a columnar body to an inner periphery of the cylindrical base material with an adhesive;

relatively displacing a cutting tool in parallel to a center axis of the cylindrical base material while rotating the workpiece about the center axis to cut the cylindrical base material with a spiral groove which reaches the columnar body;

heating the workpiece cut with the spiral groove to depolymerize the adhesive; and

removing the columnar body from the cylindrical base material.

**Patentansprüche**

1. Graphitmaterial, umfassend:

einen Graphit, der eine Mehrzahl von Poren enthält, worin der Graphit und die Mehrzahl von Poren eine Mikrostruktur bilden, und

worin, wenn ein Querschnitt der Mikrostruktur mit einem Rasterelektronenmikroskop beobachtet wird, die Anzahl der Poren, die im Querschnitt erscheinen, 250 oder mehr pro 6.000 $\mu$m$^2$ ist, die mittlere Fläche der Poren, die im Querschnitt erscheinen, 5 $\mu$m$^2$ oder weniger ist, und das durchschnittliche Seitenverhältnis der Poren, die im Querschnitt erscheinen, 0,55 oder weniger ist.

2. Graphitmaterial gemäß Anspruch 1, worin die Schütt-(Bulk)-Dichte des Graphitmaterials im Bereich von 1,78 bis 1,86 g/cm$^3$ ist.

3. Graphitmaterial gemäß einem oder mehreren der vorhergehenden Ansprüche, worin die maximale Längenachse der Poren 20 $\mu$m oder weniger ist.

4. Graphitmaterial gemäß einem oder mehreren der vorhergehenden Ansprüche, worin die Shore-Härte des Graphitmaterials im Bereich von 55 bis 80 ist, und worin der elektrische Widerstand des Graphitmaterials im Bereich von 1.000 bis 2.300 $\mu\Omega$cm ist.

5. Verwendung des Graphitmaterials gemäß einem oder mehreren der vorhergehenden Ansprüche für elektrische Entladung.

**6.** Verfahren zur Herstellung des Graphitmaterials gemäß Anspruch 1, worin das Verfahren umfasst:

Mischen von Kohlenstoffpartikeln und Pech;
Erwärmen der gemischten Kohlenstoffpartikel und des Pechs, um ein sekundäres Rohmaterial zu erhalten, während dessen flüchtiger Gehalt kontrolliert wird;
Pulverisieren des sekundären Rohmaterials, um sekundäre Rohmaterialpartikel zu erhalten;
Formen der sekundären Rohmaterialpartikel;
Brennen der geformten sekundären Rohmaterialpartikel; und
Graphitisieren der gebrannten sekundären Rohmaterialpartikel, **dadurch gekennzeichnet, dass**:

der Erweichungspunkt des Pechs 50°C oder weniger ist;
die Menge der Kohlenstoffpartikel, die mit dem Pech gemischt werden, im Bereich von 3 bis 10 Gew.% der Gesamtmenge der Kohlenstoffpartikel und des Pechs ist;
das Erwärmen der gemischten Kohlenstoffpartikel und des Pechs bei einer Temperatur von 400 bis 500°C durchgeführt wird;
die Größe der Sekundärmaterialpartikel im Bereich von 1 bis 80 $\mu$m ist.

**7.** Verfahren gemäß Anspruch 6, worin die Größe der Kohlenstoffpartikel 5 $\mu$m oder weniger ist.

**8.** Verfahren gemäß einem oder mehreren der Ansprüche 6 oder 7, worin die Median-Größe der Sekundärmaterialpartikel im Bereich von 5 bis 10 $\mu$m ist.

**9.** Elastischer Körper, der aus dem Graphitmaterial gemäß Anspruch 1 hergestellt ist.

**10.** Verfahren zur Herstellung des elastischen Körpers gemäß Anspruch 9, worin das Verfahren umfasst:

Herstellen eines zylindrischen Basismaterials unter Verwendung eines Graphitmaterials, wobei das Graphitmaterial einen Graphit umfasst, der eine Mehrzahl von Poren enthält, worin der Graphit und die Mehrzahl von Poren eine Mikrostruktur bilden, und
worin, wenn ein Querschnitt der Mikrostruktur mit einem Rasterelektronenmikroskop beobachtet wird, die Anzahl der Poren, die im Querschnitt erscheinen, 250 oder mehr pro 6.000 $\mu$m$^2$ ist, die mittlere Fläche der Poren, die im Querschnitt erscheinen, 5 $\mu$m$^2$ oder weniger ist, und das durchschnittliche Seitenverhältnis der Poren, die im Querschnitt erscheinen, 0,55 oder weniger ist;
Erhalten eines Werkstücks durch Fixieren eines säulenförmigen Körpers an einen inneren Umfang des zylindrischen Basismaterials mit Hilfe eines Klebstoffs;
relatives Verschieben eines Schneidewerkzeugs in Parallelrichtung zu einer Zentralachse des zylindrischen Basismaterials, während das Werkstück um die Zentralachse rotiert wird, um eine spiralförmige Furche in das zylindrische Basismaterial zu schneiden, die den säulenförmigen Körper erreicht;
Erwärmen des Werkstücks, in das die spiralförmige Furche geschnitten wurde, um den Klebstoff zu depolymerisieren
und
Entfernen des säulenförmigen Körpers aus dem zylinderförmigen Basismaterial.

## Revendications

**1.** Matériau graphite comprenant :

un graphite contenant une pluralité de pores, dans lequel le graphite et la pluralité de pores forment une microstructure, et
dans lequel lorsqu'une section de la microstructure est observée avec un microscope électronique à balayage, le nombre de pores apparaissant sur la section est de 250 ou
plus pour 6 000 $\mu$m$^2$, la superficie moyenne des pores apparaissant sur la section est de 5 $\mu$m$^2$ ou moins, et le rapport de côté moyen des pores apparaissant sur la section est de 0,55 ou moins.

**2.** Matériau graphite selon la revendication 1,
dans lequel la masse volumique apparente du matériau graphite va de 1,78 à 1,86 g/cm$^3$.

**3.** Matériau graphite selon une ou plusieurs des revendications précédentes,
dans lequel le grand axe maximal des pores est de 20 $\mu$m ou moins.

**4.** Matériau graphite selon une ou plusieurs des revendications précédentes,
dans lequel la dureté Shore du matériau graphite va de 55 à 80, et
dans lequel une résistance électrique du matériau graphite va de 1 000 à 2 300 $\mu$Ocm.

**5.** Utilisation du matériau graphite selon une ou plusieurs des revendications précédentes pour une décharge électrique.

**6.** Procédé de production du matériau graphite selon la revendication 1, le procédé comprenant :

le mélange de particules carbonées et de brai ;
le chauffage des particules carbonées mélangées et du brai pour obtenir un matériau brut secondaire tout en régulant son contenu volatil ;
la pulvérisation du matériau brut secondaire pour obtenir des particules de matériau brut secondaire ;
le moulage des particules de matériau brut secondaire ;
le brûlage des particules de matériau brut secondaire moulées ; et
la graphitisation des particules de matériau brut secondaire brûlées, **caractérisé en ce que** :

le point de ramollissement du brai est de 50 degrés C ou moins ;
la quantité des particules carbonées mélangées avec le brai va de 3 à 10 % en poids de la quantité totale des particules carbonées et du brai ;
le chauffage des particules carbonées mélangées et du brai est réalisé à une température de 400 à 500 °C ;
les tailles des particules de matériau secondaire vont de 1 à 80 $\mu$m.

**7.** Procédé selon la revendication 6, dans lequel la taille des particules carbonées est de 5 $\mu$m ou moins.

**8.** Procédé selon une ou plusieurs des revendications 6 et 7, dans lequel la taille médiane des particules de matériau secondaire va de 5 à 10 $\mu$m.

**9.** Corps élastique constitué du matériau graphite de la revendication 1.

**10.** Procédé de production du corps élastique de la revendication 9, le procédé comprenant :

la production d'un matériau de base cylindrique avec l'utilisation d'un matériau graphite, le matériau graphite comprenant un graphite contenant une pluralité de pores, dans lequel le graphite et la pluralité de pores forment une microstructure, et
dans lequel lorsqu'une section de la microstructure est observée avec un microscope électronique à balayage, le nombre de pores apparaissant sur la section est de 250 ou
plus pour 6 000 $\mu$m$^2$, la superficie moyenne de pores apparaissant sur la section est de 5 $\mu$m$^2$ ou moins, et le rapport de côté moyen des pores apparaissant sur la section est de 0,55 ou moins ;
l'obtention d'une pièce en fixant un corps colonnaire à une périphérie interne du matériau de base cylindrique avec un adhésif ;
le déplacement relatif d'un outil de découpe en parallèle à un axe central du matériau de base cylindrique tout en mettant la pièce en rotation autour de l'axe central afin de couper le matériau de base cylindrique avec une rainure hélicoïdale qui atteint le corps colonnaire ;
le chauffage de la coupure de pièce avec la rainure hélicoïdale pour dépolymériser l'adhésif ; et
le retrait du corps colonnaire du matériau de base cylindrique.

FIG. 1A

FIG. 1B

| NO. | PARTICLE SIZE (μm) | FREQUENCY (%) | INTEGRATED VALUE (%) | NO. | PARTICLE SIZE (μm) | FREQUENCY (%) | INTEGRATED VALUE (%) |
|---|---|---|---|---|---|---|---|
| 1 | 0.115 | 0.000 | 0.000 | 32 | 7.697 | 9.645 | 54.072 |
| 2 | 0.131 | 0.000 | 0.000 | 33 | 8.816 | 10.231 | 64.303 |
| 3 | 0.150 | 0.000 | 0.000 | 34 | 10.097 | 10.026 | 74.329 |
| 4 | 0.172 | 0.000 | 0.000 | 35 | 11.565 | 8.564 | 82.894 |
| 5 | 0.197 | 0.000 | 0.000 | 36 | 13.246 | 6.685 | 89.579 |
| 6 | 0.226 | 0.000 | 0.000 | 37 | 15.172 | 4.861 | 94.440 |
| 7 | 0.259 | 0.000 | 0.000 | 38 | 17.377 | 2.852 | 97.291 |
| 8 | 0.296 | 0.000 | 0.000 | 39 | 19.904 | 1.549 | 98.840 |
| 9 | 0.339 | 0.000 | 0.000 | 40 | 22.797 | 0.741 | 99.581 |
| 10 | 0.389 | 0.000 | 0.000 | 41 | 26.111 | 0.294 | 99.876 |
| 11 | 0.445 | 0.000 | 0.000 | 42 | 29.907 | 0.124 | 100.000 |
| 12 | 0.510 | 0.000 | 0.000 | 43 | 34.255 | 0.000 | 100.000 |
| 13 | 0.584 | 0.000 | 0.000 | 44 | 39.234 | 0.000 | 100.000 |
| 14 | 0.669 | 0.000 | 0.000 | 45 | 44.938 | 0.000 | 100.000 |
| 15 | 0.766 | 0.000 | 0.000 | 46 | 51.471 | 0.000 | 100.000 |
| 16 | 0.877 | 0.000 | 0.000 | 47 | 58.953 | 0.000 | 100.000 |
| 17 | 1.005 | 0.000 | 0.000 | 48 | 67.523 | 0.000 | 100.000 |
| 18 | 1.151 | 0.000 | 0.000 | 49 | 77.339 | 0.000 | 100.000 |
| 19 | 1.318 | 0.000 | 0.000 | 50 | 88.583 | 0.000 | 100.000 |
| 20 | 1.510 | 0.131 | 0.131 | 51 | 101.460 | 0.000 | 100.000 |
| 21 | 1.729 | 0.380 | 0.511 | 52 | 116.210 | 0.000 | 100.000 |
| 22 | 1.981 | 1.005 | 1.516 | 53 | 133.103 | 0.000 | 100.000 |
| 23 | 2.269 | 2.036 | 3.552 | 54 | 152.453 | 0.000 | 100.000 |
| 24 | 2.599 | 2.851 | 6.403 | 55 | 174.616 | 0.000 | 100.000 |
| 25 | 2.976 | 3.108 | 9.510 | 56 | 200.000 | 0.000 | 100.000 |
| 26 | 3.409 | 3.398 | 12.909 | | | | |
| 27 | 3.905 | 4.290 | 17.198 | | | | |
| 28 | 4.472 | 5.566 | 22.765 | | | | |
| 29 | 5.122 | 6.460 | 29.224 | | | | |
| 30 | 5.867 | 7.049 | 36.273 | | | | |
| 31 | 6.720 | 8.154 | 44.427 | | | | |

## FIG. 2A

## FIG. 2B

| NO. | PARTICLE SIZE (μm) | FREQUENCY (%) | INTEGRATED VALUE (%) | NO. | PARTICLE SIZE (μm) | FREQUENCY (%) | INTEGRATED VALUE (%) |
|---|---|---|---|---|---|---|---|
| 1 | 0.115 | 0.000 | 0.000 | 32 | 7.697 | 8.613 | 49.814 |
| 2 | 0.131 | 0.000 | 0.000 | 33 | 8.816 | 9.339 | 59.153 |
| 3 | 0.150 | 0.000 | 0.000 | 34 | 10.097 | 9.478 | 68.630 |
| 4 | 0.172 | 0.000 | 0.000 | 35 | 11.565 | 8.598 | 77.228 |
| 5 | 0.197 | 0.000 | 0.000 | 36 | 13.246 | 7.297 | 84.524 |
| 6 | 0.226 | 0.000 | 0.000 | 37 | 15.172 | 5.899 | 90.424 |
| 7 | 0.259 | 0.000 | 0.000 | 38 | 17.377 | 4.036 | 94.460 |
| 8 | 0.296 | 0.000 | 0.000 | 39 | 19.904 | 2.615 | 97.075 |
| 9 | 0.339 | 0.000 | 0.000 | 40 | 22.797 | 1.538 | 98.613 |
| 10 | 0.389 | 0.000 | 0.000 | 41 | 26.111 | 0.778 | 99.392 |
| 11 | 0.445 | 0.000 | 0.000 | 42 | 29.907 | 0.409 | 99.801 |
| 12 | 0.510 | 0.000 | 0.000 | 43 | 34.255 | 0.199 | 100.000 |
| 13 | 0.584 | 0.000 | 0.000 | 44 | 39.234 | 0.000 | 100.000 |
| 14 | 0.669 | 0.000 | 0.000 | 45 | 44.938 | 0.000 | 100.000 |
| 15 | 0.766 | 0.000 | 0.000 | 46 | 51.471 | 0.000 | 100.000 |
| 16 | 0.877 | 0.000 | 0.000 | 47 | 58.953 | 0.000 | 100.000 |
| 17 | 1.005 | 0.000 | 0.000 | 48 | 67.523 | 0.000 | 100.000 |
| 18 | 1.151 | 0.000 | 0.000 | 49 | 77.339 | 0.000 | 100.000 |
| 19 | 1.318 | 0.000 | 0.000 | 50 | 88.583 | 0.000 | 100.000 |
| 20 | 1.510 | 0.214 | 0.214 | 51 | 101.460 | 0.000 | 100.000 |
| 21 | 1.729 | 0.546 | 0.760 | 52 | 116.210 | 0.000 | 100.000 |
| 22 | 1.981 | 1.260 | 2.020 | 53 | 133.103 | 0.000 | 100.000 |
| 23 | 2.269 | 2.250 | 4.271 | 54 | 152.453 | 0.000 | 100.000 |
| 24 | 2.599 | 2.829 | 7.099 | 55 | 174.616 | 0.000 | 100.000 |
| 25 | 2.976 | 2.881 | 9.981 | 56 | 200.000 | 0.000 | 100.000 |
| 26 | 3.409 | 3.079 | 13.060 | | | | |
| 27 | 3.905 | 3.872 | 16.932 | | | | |
| 28 | 4.472 | 5.020 | 21.952 | | | | |
| 29 | 5.122 | 5.772 | 27.724 | | | | |
| 30 | 5.867 | 6.257 | 33.981 | | | | |
| 31 | 6.720 | 7.220 | 41.201 | | | | |

## FIG. 3A

## FIG. 3B

| NO. | PARTICLE SIZE (μm) | FREQUENCY (%) | INTEGRATED VALUE (%) | NO. | PARTICLE SIZE (μm) | FREQUENCY (%) | INTEGRATED VALUE (%) |
|-----|---------|-----------|----------|-----|---------|-----------|----------|
| 1 | 0.115 | 0.228 | 0.228 | 32 | 7.697 | 5.665 | 78.637 |
| 2 | 0.131 | 0.348 | 0.576 | 33 | 8.816 | 5.273 | 83.910 |
| 3 | 0.150 | 0.426 | 1.001 | 34 | 10.097 | 4.729 | 88.639 |
| 4 | 0.172 | 0.507 | 1.508 | 35 | 11.565 | 3.863 | 92.502 |
| 5 | 0.197 | 0.593 | 2.101 | 36 | 13.246 | 2.923 | 95.426 |
| 6 | 0.226 | 0.701 | 2.802 | 37 | 15.172 | 2.094 | 97.520 |
| 7 | 0.259 | 0.823 | 3.625 | 38 | 17.377 | 1.265 | 98.784 |
| 8 | 0.296 | 0.840 | 4.465 | 39 | 19.904 | 0.710 | 99.494 |
| 9 | 0.339 | 0.832 | 5.297 | 40 | 22.797 | 0.354 | 99.848 |
| 10 | 0.389 | 0.744 | 6.041 | 41 | 26.111 | 0.152 | 100.000 |
| 11 | 0.445 | 0.646 | 6.687 | 42 | 29.907 | 0.000 | 100.000 |
| 12 | 0.510 | 0.549 | 7.236 | 43 | 34.255 | 0.000 | 100.000 |
| 13 | 0.584 | 0.495 | 7.731 | 44 | 39.234 | 0.000 | 100.000 |
| 14 | 0.669 | 0.476 | 8.207 | 45 | 44.938 | 0.000 | 100.000 |
| 15 | 0.766 | 0.506 | 8.713 | 46 | 51.471 | 0.000 | 100.000 |
| 16 | 0.877 | 0.597 | 9.310 | 47 | 58.953 | 0.000 | 100.000 |
| 17 | 1.005 | 0.752 | 10.062 | 48 | 67.523 | 0.000 | 100.000 |
| 18 | 1.151 | 0.989 | 11.051 | 49 | 77.339 | 0.000 | 100.000 |
| 19 | 1.318 | 1.348 | 12.399 | 50 | 88.583 | 0.000 | 100.000 |
| 20 | 1.510 | 1.951 | 14.349 | 51 | 101.460 | 0.000 | 100.000 |
| 21 | 1.729 | 2.915 | 17.264 | 52 | 116.210 | 0.000 | 100.000 |
| 22 | 1.981 | 4.218 | 21.482 | 53 | 133.103 | 0.000 | 100.000 |
| 23 | 2.269 | 5.400 | 26.883 | 54 | 152.453 | 0.000 | 100.000 |
| 24 | 2.599 | 5.762 | 32.645 | 55 | 174.616 | 0.000 | 100.000 |
| 25 | 2.976 | 5.514 | 38.158 | 56 | 200.000 | 0.000 | 100.000 |
| 26 | 3.409 | 5.422 | 43.580 | | | | |
| 27 | 3.905 | 5.710 | 49.289 | | | | |
| 28 | 4.472 | 6.071 | 55.360 | | | | |
| 29 | 5.122 | 6.036 | 61.396 | | | | |
| 30 | 5.867 | 5.830 | 67.227 | | | | |
| 31 | 6.720 | 5.746 | 72.972 | | | | |

## FIG. 4A

## FIG. 4B

| NO. | PARTICLE SIZE (μm) | FREQUENCY (%) | INTEGRATED VALUE (%) | NO. | PARTICLE SIZE (μm) | FREQUENCY (%) | INTEGRATED VALUE (%) |
|---|---|---|---|---|---|---|---|
| 1 | 0.115 | 0.000 | 0.000 | 32 | 7.697 | 2.159 | 15.244 |
| 2 | 0.131 | 0.000 | 0.000 | 33 | 8.816 | 2.498 | 17.742 |
| 3 | 0.150 | 0.000 | 0.000 | 34 | 10.097 | 2.894 | 20.636 |
| 4 | 0.172 | 0.000 | 0.000 | 35 | 11.565 | 3.313 | 23.949 |
| 5 | 0.197 | 0.000 | 0.000 | 36 | 13.246 | 3.938 | 27.887 |
| 6 | 0.226 | 0.000 | 0.000 | 37 | 15.172 | 4.763 | 32.650 |
| 7 | 0.259 | 0.000 | 0.000 | 38 | 17.377 | 5.582 | 38.232 |
| 8 | 0.296 | 0.000 | 0.000 | 39 | 19.904 | 6.422 | 44.654 |
| 9 | 0.339 | 0.000 | 0.000 | 40 | 22.797 | 7.077 | 51.731 |
| 10 | 0.389 | 0.000 | 0.000 | 41 | 26.111 | 7.458 | 59.190 |
| 11 | 0.445 | 0.000 | 0.000 | 42 | 29.907 | 7.504 | 66.694 |
| 12 | 0.510 | 0.000 | 0.000 | 43 | 34.255 | 7.161 | 73.855 |
| 13 | 0.584 | 0.000 | 0.000 | 44 | 39.234 | 6.475 | 80.330 |
| 14 | 0.669 | 0.000 | 0.000 | 45 | 44.938 | 5.607 | 85.937 |
| 15 | 0.766 | 0.000 | 0.000 | 46 | 51.471 | 4.493 | 90.429 |
| 16 | 0.877 | 0.000 | 0.000 | 47 | 58.953 | 3.243 | 93.672 |
| 17 | 1.005 | 0.000 | 0.000 | 48 | 67.523 | 2.222 | 95.894 |
| 18 | 1.151 | 0.000 | 0.000 | 49 | 77.339 | 1.430 | 97.324 |
| 19 | 1.318 | 0.000 | 0.000 | 50 | 88.583 | 0.914 | 98.238 |
| 20 | 1.510 | 0.109 | 0.109 | 51 | 101.460 | 0.593 | 98.831 |
| 21 | 1.729 | 0.251 | 0.360 | 52 | 116.210 | 0.376 | 99.207 |
| 22 | 1.981 | 0.541 | 0.901 | 53 | 133.103 | 0.276 | 99.483 |
| 23 | 2.269 | 0.923 | 1.824 | 54 | 152.453 | 0.224 | 99.706 |
| 24 | 2.599 | 1.101 | 2.925 | 55 | 174.616 | 0.164 | 99.871 |
| 25 | 2.976 | 1.065 | 3.990 | 56 | 200.000 | 0.129 | 100.000 |
| 26 | 3.409 | 1.097 | 5.087 | | | | |
| 27 | 3.905 | 1.302 | 6.389 | | | | |
| 28 | 4.472 | 1.592 | 7.981 | | | | |
| 29 | 5.122 | 1.674 | 9.655 | | | | |
| 30 | 5.867 | 1.632 | 11.287 | | | | |
| 31 | 6.720 | 1.797 | 13.085 | | | | |

## FIG. 5A

## FIG. 5B

## FIG. 5C

## FIG. 6A

## FIG. 6B

## FIG. 6C

## FIG. 7A

## FIG. 7B

## FIG. 7C

## FIG. 8A

## FIG. 8B

## FIG. 8C

## FIG. 9

## FIG. 10

*FIG. 11A*

13

*FIG. 11B*

W1

13

17

*FIG. 11C*

13a

W1

13

17

21

23

*FIG. 11D*

23

W2

17

13

*FIG. 11E*

11

13

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1097523 A
- JP 4240022 A
- JP 6144811 A
- US 5525276 A